# EUROPEAN PATENT SPECIFICATION

(11) **EP 2 299 832 B1**
(45) Date of publication and mention of the grant of the patent: **14.08.2019**
(21) Application number: 09757675.5
(22) Date of filing: 02.06.2009
(51) Int. Cl.: A21D 2/18, A21D 2/16, A21D 6/00, A23L 29/30, A23L 33/11, A23L 29/212, A21D 2/26

(54) **BREAD COMPOSITION WITH IMPROVED BREAD VOLUME**
BROTZUSAMMENSETZUNG MIT VERBESSERTEM BROTVOLUMEN
COMPOSITION DE PAIN AVEC VOLUME DE PAIN AMÉLIORÉ

(30) Priority: 02.06.2008 FI 20085533
(43) Date of publication of application: 30.03.2011
(73) Proprietor: Raisio Nutrition Ltd., 21201 Raisio (FI)
(72) Inventor: LAHTINEN, Ritva, FI-21260 Raisio (FI); EKBLOM, Jari, FI-21210 Raisio (FI); FRILANDER-POIKONEN, Leena, FI-20300 Turku (FI)
(74) Representative: Lee, Nicholas John
(86) International application number: PCT/FI2009/050467
(87) International publication number: WO 2009/147297

(56) References cited:
- WO-A-98/58554
- WO-A-03/065822
- WO-A-03/086108
- WO-A-2005/084445
- DE-A1- 10 253 111
- JP-A- 2003 259 794
- US-A1- 2003 003 131
- US-A1- 2006 035 009
- US-A1- 2008 220 051

## Description

### Field of Invention

The present invention concerns a bread composition with improved dough stability and/or bread volume. The bread is also healthier due to the added ingredient. The invention also relates to a dough composition and to a plant sterol ester and/or plant stanol ester composition in powder form.

### Background of the Invention

Popularity of healthful bakery foods, especially whole grain baking, is growing. Consumers, dieticians and health authorities point out the health benefits of whole grains.

Whole grain flour baking is challenging for bakeries. Compared to standard white flour, whole grain flour is heavier and denser. The grain creates holes in the gluten structure and weakens the dough. Many bakers add gluten in their formulas to strengthen the dough, which can lead to additional problems, such as adhesion to the surface of baking machines.

One of the main functional food categories is cholesterol lowering foods. Plant sterol and/or stanol and/or their esters have been shown to be one of the most effective cholesterol lowering agents used in functional foods. Rye breads containing free plant sterols are on the market. This cholesterol lowering bread is in structure dry and crumble and it has a dark colour and big air holes. WO 98/58554 teaches how to make rye or wheat bread with free plant sterols. The structure of the bread is mentioned in many examples to be harder and more compact and the bread had a moisture mouthfeel compared to bread without sterol addition.

Addition of triglycerides to the dough is known in the art to improve bread volume and tenderness. Shortenings used in baking are often partially hydrogenated and contain saturated and trans fatty acids. Current dietary recommendations guide to reduce the amount of both trans and saturated fatty acids in the diet.

Emulsifiers as well as triglycerides are known in the art to be used as crumb softeners and have positive effects on bread staling. In WO 2005/084445 high amounts of emulsifiers are used with plant sterol ester and/or plant stanol ester to improve softness and staling of the bread. Many of the mentioned emulsifiers have regulatory limitation of usage and raise suspects by consumers. The examples in the application guide to use emulsifiers close to that limit.

WO 01/37681 relates to a composition useful in the food industry. The composition comprises a phytosterol or phytostanol, an isolated water soluble protein, and optionally an emulsifier, wherein the weight ratio of the protein to the phytosterol or phytostanol is from 0.2:1 to 10:1, and the weight ratio of the emulsifier to the phytosterol or phytostanol is from 0.2:1 to 5:1.

Using ingredients in powder form is convenient in bakeries. A plant sterol ester and/or plant stanol ester composition in powder form can easily be mixed with other dry materials. Plant sterol ester and/or plant stanol ester as such is solid at room temperature and needs an additional process step and equipment for melting before it can be used in dough making. Melted plant sterol ester and/or plant stanol ester may crystallise into bowl walls during mixing and kneading. This may cause losses and nonhomogenous distribution of the active ingredient. These problems can be avoided by using a plant sterol ester and/or plant stanol ester composition in powder form.

### Summary of the Invention

The object of the present invention is to improve dough stability, bread volume and/or bread texture by using a dough composition comprising a plant sterol ester and/or plant stanol ester composition in powder form. Such improvement was found in wheat bread, but it has effect especially in whole grain baking, when the gluten content of the dough is low or when the dough is free of gluten.

It has now been found that addition of a plant sterol ester and/or plant stanol ester composition in powder form has positive effects on dough stability, structure and/or texture. One aspect of the invention is that the dough's prolonged expansion time gives flexibility in production, still leading to superior volume and texture of the baked bread. Long kneading stability of dough is characteristic for strong flour. It has been found that addition of a plant sterol ester and/or plant stanol ester composition in powder form contributes kneading stability, especially in whole grain or low gluten doughs.

Using a plant sterol ester and/or plant stanol ester composition in powder form is particularly advantageous in rye bread making. The low gluten content of traditional rye bread unables gas retention and the bread has a small volume and a hard texture. Addition of a plant sterol ester and/or plant stanol ester composition in powder form enhances dough structure and increases kneading stability. Additionally, it increases bread volume and gives the rye bread palatable, more toast like texture, which modern consumers prefer.

Another benefit with the invention is that the breads according to the invention are also healthier since they are suitable for reducing serum total and/or LDL cholesterol levels and do not contain trans fatty acids. In addition, a plant sterol ester and/or plant stanol ester composition in powder form has a lower energy value compared to traditional fats and oils due to the virtually unabsorbable plant sterols and/or stanols.

Another benefit with the invention is that good tasting, fine texture whole grain breads can be made still be avoiding addition of excessive amounts of gluten, emulsifiers, enzymes or other additives commonly used in whole grain baking.

The plant sterol ester and/or plant stanol ester composition in powder form is convenient to incorporate into dough together with other dry ingredients. The plant sterol ester and/or plant stanol ester composition in powder form can also conveniently be used in forming pre-mixes to be used in baking.

### Detailed Description of the Invention

According to a first aspect, there is provided a composition in powder form as defined in claim 1, comprising:
from 60-90% by dry weight plant sterol ester and/or plant stanol ester;
from 10-40% by dry weight carrier; and
an emulsifier in an amount of 4-5% of the weight of the plant sterol ester and/or plant stanol ester,
wherein the carrier comprises 12-18% by dry weight caseinate and 82-88% by dry weight maltodextrin; and
wherein the emulsifier is a citric acid ester of mono- and diglycerides.

According to a second aspect, there is provided a dough composition as defined in claim 11, comprising by dry weight from 78-98% flour and from 3.5-10% composition in powder form as defined in any one of claims 1 to 10.

According to a third aspect, there is provided a bread composition as defined in claim 13, comprising by dry weight from 78-98% flour and from 3.5-10% composition in powder form as defined in any one of claims 1 to 10.

According to a fourth aspect, there is provided a use as defined in claim 14 of a composition in powder form for increasing bread volume, by incorporating the composition in powder form in an amount of from 3.5-10% by dry weight of the dough.

According to a fifth aspect, there is provided a method of preparing dough for bread manufacturing as defined in claim 15 comprising mixing the dry ingredients of the bread with a composition in powder form as defined in any one of claims 1 to 10 in an amount of from 3.5-10% by dry weight of the dough; adding water and mixing to obtain a dough.

In the dough or bread composition according to the invention, protein hydrolysates may be used in combination with the carrier. The caseinate is preferably sodium, calsium or potassium caseinate, most preferably it is sodium caseinate. Caseinate preferably has a protein content of from 30 to 100% by dry weight, more preferably from 50 to 98% by dry weight, and most preferably at least 80% by dry weight.

Preferably the maltodextrin used in the carrier has a dextrose equivalent (DE) value of 10-20, most preferably of 15-20. As maltodextrin is used here as a carrier, it is non-emulsifying.

The plant sterol ester and/or plant stanol ester composition in powder form comprises from 60 to 90%, preferably from 65 to 90%, and most preferably from 70 to 90% by dry weight plant sterol ester and/or plant stanol ester, and from 10 to 40%, preferably from 10 to 35%, and most preferably from 10 to 30% by dry weight carrier.

As set forth above the powder composition comprises a carrier comprising from 82 to 88% by dry weight maltodextrin and from 12 to 18% by dry weight caseinate.

The dough or bread according to the invention contains from 3.5 to 10% by dry weight of the plant sterol ester and/or plant stanol ester composition in powder form.

The dough or bread according to the invention is made with leavening agents (yeast, leavening aids such as baking powder) or without them through fermentation. The bread can be any kind of bread such as roll, loaf, bun, toast, French stick or muffin. The bread may also be sliced before packing. The dough or bread can be made by using any kind of flours, e.g. white flours, whole grain flours, gluten free flours, crushed grains or seeds, whole grains or seeds, malted grains, flakes (e.g. oat or potato flakes), different kinds of flour fractions, e.g. fibre enriched fractions, endosperm rich fractions, or mixtures thereof. The bread is made with conventional methods known in the art.

Preferably the flour used in the dough or bread according to the invention comprises from 35 to 75%, more preferably at least 40% by dry weight of whole grain flours. On the other hand, in rye bread the amount of rye flour, i.e. whole grain rye, different fractions of rye grain or rye malt, is preferably from 25 to 100%, more preferably at least 30% by dry weight of the flour used in the rye dough or rye bread according to the invention. The invention is especially applicable to these two types of doughs and breads.

Optionally the dough is frozen before baking or it may be only partially baked and either packed in protecting gas or frozen after the partial baking.

The bread of the present invention may also comprise optionally ingredients to improve bread making such as gluten, triglycerides, emulsifiers, oxidisers, enzymes and protein hydrolysates. It may also contain other ingredients, such as taste or colouring components e.g. salt, flavours, herbs and/or nuts. Other healthy components (e.g. n-3 fatty acids, vitamins and/or minerals) may also be added.

Also disclosed herein is a method for improving dough stability comprising incorporating into a dough a plant sterol ester and/or plant stanol ester composition in powder form in an amount of from 2.0 to 22% by dry weight of the dough, wherein the plant sterol ester and/or plant stanol ester composition in powder form comprises from 50 to 95% by weight plant sterol ester and/or plant stanol ester and from 5 to 50% by weight carrier.

The dough is preferably as defined above.

Also disclosed herein is a method of preparing bread with increased volume, comprising incorporating into a dough a plant sterol ester and/or plant stanol ester composition in powder form in an amount of from 2.0 to 22% by dry weight of the dough, wherein the plant sterol ester and/or plant stanol ester composition in powder form comprises from 50 to 95% by weight plant sterol ester and/or plant stanol ester and from 5 to 50% by weight carrier, and baking the bread.

Preferably the method comprises mixing the plant sterol ester and/or plant stanol ester composition in powder form with the dry ingredients of the bread, adding water and mixing to obtain a dough, kneading the dough and baking the bread.

The bread is preferably as defined above.

According to a fifth aspect, there is provided a method of preparing dough for bread manufacturing as defined in claim 15.

In the composition in powder form, the maltodextrin used in the carrier preferably has a dextrose equivalent (DE) value of 10-20, most preferably of 15-20. As maltodextrin is used here as a carrier, it is non-emulsifying.

The caseinate is preferably sodium, calsium or potassium caseinate, most preferably it is sodium caseinate. The whey protein is preferably whey protein concentrate or powder. The protein-containing component preferably has a protein content of from 30 to 100% by dry weight, more preferably from 50 to 98% by dry weight, and most preferably at least 80% by dry weight.

The composition comprises from 60 to 90%, preferably from 65 to 90%, and more preferably from 70 to 90%, and most preferably from 80 to 90% by dry weight plant sterol ester and/or plant stanol ester, and from 10 to 40%, preferably from 10 to 35%, more preferably from 10 to 30%, and most preferably from 10 to 20% by dry weight carrier comprising caseinate and maltodextrin.

The moisture content of the composition may be less than 15%, preferably less than 10%, more preferably less than 5% and most preferably less than 3% by weight.

The composition of plant sterol ester and/or plant stanol ester in powder form may be manufactured by spray drying an emulsion containing plant sterol ester and/or plant stanol ester. The powder can also be made with other suitable processes than spray drying, which are known in the art e.g. by fluid bed drying.

In this specification the plant sterols are 4-desmethyl sterols and the plant stanols are 4-desmethyl stanols. Typical 4-desmethyl sterols are sitosterol, campesterol, stigmasterol, brassicasterol, 22-dehydrobrassicasterol and Δ5-avenasterol. Typical stanols are sitostanol, campestanol and their 24-epimers. The term "plant sterol and/or plant stanol" includes all possible mixtures of named sterols and/or stanols as well as any individual plant sterol or plant stanol.

In this invention the plant sterols and/or plant stanols are esterified with a carboxylic acid and they are here called "plant sterol ester and/or plant stanol ester". Examples of suitable carboxylic acids are fatty acids (2-24 carbon atoms, saturated, monounsaturated or polyunsaturated, including also special fatty acids, such as conjugated fatty acids, e.g. CLA, and EPA and DHA), di- and tricarboxylic acids and hydroxy acids, and any mixture of said acids. Preferably the plant sterols are esterified with fatty acids, most preferably with vegetable oil based fatty acids.

Stanol fatty acid ester and the effects thereof, as well as a suitable method for its preparation, are disclosed in US Patent No. 6,174,560. Obviously sterol esters can efficiently be produced by the same method. Alternatively fatty acid esters of plant sterols and/or plant stanols can be produced by any method known in the art.

The following examples are presented to further illustrate the invention. All percentages referred to in this specification are given as weight-% if not otherwise specified. The plant stanol ester used in the examples is made of fatty acids from rapeseed oil and the stanol is made from tall oil sterols by hydrogenation.

### Example 1

### Effect of kneading time on bread volume

**Whole grain bread**

| **Ingredients / g** | **recipe 1 control** | **recipe 2 control** | **recipe 3 invention** | **recipe 4 invention** |
|---|---|---|---|---|
| kneading time | 4 min | 5 min | 4 min | 5 min |
| Whole grain wheat flour | 1875 | 1875 | 1720 | 1720 |
| Wheat flour | 625 | 625 | 573 | 573 |
| Stanol ester powder * | 0 | 0 | 207 | 207 |
| Salt | 45 | 45 | 45 | 45 |
| Yeast | 45 | 45 | 45 | 45 |
| Water | 1550 | 1550 | 1550 | 1550 |
| Bread volume (l/kg) | 2.12 | 2.17 | 2.94 | 3.13 |

| | | | | |
|---|---|---|---|---|
| * comprised 70% plant stanol ester, 3% citric acid ester of mono- and diglycerides, 23% maltodextrin and 4% sodium caseinate | | | | |

Toasts were made with a procedure generally known in the art. The dry ingredients were mixed and water was added and mixed with the dry components. The doughs were kneaded for 4 or 5 minutes, divided, proved (35 minutes), baked and cooled.

The doughs were manually evaluated by the baker. The dough made according to recipe 4 had as good kneading stability as the shorter time kneaded dough (recipe 3). The control dough lost kneading stability, if time was increased by one minute. A longer kneading time improved bread volumes of bread containing a powder form of plant sterol ester and/or plant stanol ester (recipes 3 and 4). Kneading time had no practical effect on control bread volumes (recipes 1 and 2).

The bread volume was measured by a standard method observing rapeseed displacement.

### Example 2

### Effect of proving time on bread volume

**Whole grain bread**

| **Ingredients / g** | **recipe 5 control** | **recipe 6 control** | **recipe 7 invention** | **recipe 8 invention** |
|---|---|---|---|---|
| **proving time** | 35 min | 55 min | 35 min | 55 min |
| Whole grain wheat flour | 1875 | 1875 | 1720 | 1720 |
| Wheat flour | 625 | 625 | 573 | 573 |
| Stanol ester powder * | 0 | 0 | 207 | 207 |
| Salt | 45 | 45 | 45 | 45 |
| Yeast | 45 | 45 | 45 | 45 |
| Water | 1550 | 1550 | 1550 | 1550 |
| Bread volume (l/kg) | 2.12 | 2.17 | 2.88 | 3.23 |

| | | | | |
|---|---|---|---|---|
| * comprised 70% plant stanol ester, 3% citric acid ester of mono- and diglycerides, 23% maltodextrin and 4% sodium caseinate | | | | |

The toasts were made with a procedure generally known in the art. The dry ingredients were mixed and water was added and mixed with the dry ingredients. The dough was kneaded (4 min), divided, proved 35 or 55 minutes, baked and cooled.

The dough made with a powder form of plant sterol ester and/or plant stanol ester (recipes 7 and 8) was stable during the extended proving time. The bread volume was improved when longer proving time was used. Proving time had practically no positive effect on control bread volumes (recipes 5 and 6).

### Example 3

**Toast**

| **Ingredients / g** | **recipe 1** | **recipe 2** | **recipe 3** | **recipe 4** |
|---|---|---|---|---|
| | **control** | **baking fat** | **free sterols** | **invention** |
| Wheat flour | 2500 | 2361 | 2417 | 2295.5 |
| Baking fat* | 0 | 139 | 0 | 0 |
| Free sterols** | 0 | 0 | 83 | 0 |
| Stanol ester powder*** | 0 | 0 | 0 | 204.5 |
| Salt | 45 | 45 | 45 | 45 |
| Yeast | 45 | 45 | 45 | 45 |
| Water | 1500 | 1500 | 1500 | 1500 |
| Bread volume (l/kg) | 3.39 | 3.66 | 3.52 | 3.98 |

| | | | | |
|---|---|---|---|---|
| * contained partially hydrogenated rapeseed oil (containing trans fatty acids), palm oil and rapeseed oil. The amount of fat in the baking fat was comparable to the fat content of the stanol ester powder in recipe 4 i.e. fatty acids from the fatty acid part of the stanol ester. ** used amounts of stanol ester powder and free sterols have equal sterol/stanol content, i.e. 3.2% of the dry ingredients of the dough. *** comprised 70% plant stanol ester, 3% citric acid ester of mono- and diglycerides, 23% maltodextrin and 4% sodium caseinate. | | | | |

The toasts were made with a procedure generally known in the art. The dry ingredients and fats were mixed and water was added and mixed with the dry ingredients. The dough was kneaded, divided, proved, baked and cooled.

The dough containing stanol ester powder (recipe 4) expanded well. Toasts made with stanol ester powder had the biggest bread volume and were most tender. Baking fat (recipe 2) also gave a bigger volume than control (recipe 1) and free sterol powder (recipe 3), but not as much as stanol ester powder. Baking fat contains unhealthy trans and saturated fatty acids and the use thereof can be avoided by using the powder according to the invention instead.

### Example 4

**Whole grain bread**

| **Ingredients / g** | **recipe 5** | **recipe 6** | **recipe 7** | **recipe 8** |
|---|---|---|---|---|
| | **control** | **baking fat** | **free sterols** | **invention** |
| Whole grain wheat flour | 1875 | 1769 | 1812 | 1720 |
| Wheat flour | 625 | 590 | 649 | 573 |
| Baking fat* | 0 | 141 | 0 | 0 |
| Free sterols** | 0 | 0 | 84 | 0 |
| Stanol ester powder*** | 0 | 0 | 0 | 207 |
| Salt | 45 | 45 | 45 | 45 |
| Yeast | 45 | 45 | 45 | 45 |
| Water | 1550 | 1550 | 1550 | 1550 |
| Bread volume (l/kg) | 2.12 | 2.89 | 2.51 | 2.94 |

| | | | | |
|---|---|---|---|---|
| * contained partially hydrogenated rapeseed oil (containing trans fatty acids), palm oil and rapeseed oil. The amount of fat in the baking fat was comparable to the fat content of the stanol ester powder in recipe 4 i.e. fatty acids from the fatty acid part of the stanol ester. ** used amounts of stanol ester powder and free sterols had equal sterol/stanol content, i.e. 3.2% of the dry ingredients of the dough *** comprised 70% plant stanol ester, 3% citric acid ester of mono- and di-glycerides, 23% maltodextrin and 4% sodium caseinate. | | | | |

Whole grain breads were baked as toasts in the same way as in example 3. In whole grain baking gluten network tends to be short. This is reflected in the results in the bread volumes: the volume of the control bread was 62% of the control wheat toast in example 3, recipe 1. Powdered form of stanol ester improved dough making and gave the biggest volume of the bread compared to other breads (recipes 5-7).

### Example 5

**Toast containing rye flour**

| **Ingredients / % of dry weight** | **reference** | **invention** |
|---|---|---|
| Rye flour (endosperm fraction) | 39.8 | 39.0 |
| Wheat flour | 53.0 | 52.1 |
| Stanol ester powder* | 0 | 5.4** |
| Stanol esters | 3.7 | 0 |
| Salt | 2.6 | 2.6 |
| Yeast | 0.9 | 0.9 |
| Bread volume (l/kg) | 2.57 | 2.81 |

| | | |
|---|---|---|
| * comprised 70% plant stanol ester, 3% citric acid ester of mono- and diglycerides, 23% maltodextrin and 4% sodium caseinate ** equals to 3.7% stanol esters | | |

Bread containing rye flour was made in the same way as the toasts in example 3. The powder form of stanol ester improved the volume and gave a soft texture.

### Example 6

**Whole grain bread**

| **Ingredients / g** | |
|---|---|
| Whole grain wheat flour | 1670 |
| Wheat flour | 573 |
| Crushed grains | 50 |
| Stanol ester powder | 207 |
| Salt | 45 |
| Yeast | 45 |
| Water | 1550 |
| Bread volume (l/kg) | 2.90 |

The whole grain bread was made in the same way as the toasts in example 3. Stanol ester powder comprised 60% plant stanol ester, 3% citric acid ester of mono- and diglycerides, 31% maltodextrin and 6% sodium caseinate. The bread volume was excellent.

### Example 7

**Whole grain rye bread**

| **Ingredients / g** | **control** | **invention** |
|---|---|---|
| Sour dough | 1250 | 1250 |
| Whole grain rye flour | 1435 | 1600 |
| Crushed rye grains | 50 | 50 |
| Stanol ester powder* | 0 | 165 |
| Rye malt | 25 | 25 |
| Salt | 40 | 40 |
| Water | 880 | 880 |
| Bread volume (l/kg) | 1.46 | 1.70 |

| | | |
|---|---|---|
| * comprised 70% plant stanol ester, 3% citric acid ester of mono- and diglycerides, 23% maltodextrin and 4% sodium caseinate | | |

The dry ingredients were mixed and the sour dough and water was added and mixed with the dry ingredients. The dough was kneaded, allowed to rest, divided, proved, baked and cooled. The volume of the bread was 1.70 l/kg compared to control 1.46 l/kg.

### Example 8

**Rye bread**

| **Ingredients / g** | **control** | **invention** |
|---|---|---|
| Sour dough | 1250 | 1250 |
| Whole grain rye flour | 743 | 825 |
| Wheat flour | 743 | 825 |
| Sterol ester powder * | 0 | 165 |
| Salt | 40 | 40 |
| Water | 880 | 880 |
| Bread volume (l/kg) | 1.50 | 1.80 |

| | | |
|---|---|---|
| * comprised 70% plant sterol ester, 3% citric acid ester of mono- and diglycerides, 23% maltodextrin and 4% sodium caseinate | | |

The bread was made as in Example 7. The volume of the bread was 1.80 l/kg compared to control 1.50 l/kg.

## Claims

1. A composition in powder form comprising:
from 60-90% by dry weight plant sterol ester and/or plant stanol ester;
from 10-40% by dry weight carrier; and
an emulsifier in an amount of 4-5% of the weight of the plant sterol ester and/or plant stanol ester,
wherein the carrier comprises 12-18% by dry weight caseinate and 82-88% by dry weight maltodextrin; and
wherein the emulsifier is a citric acid ester of mono- and diglycerides.

2. The composition according to claim 1, wherein the caseinate is sodium caseinate.

3. The composition according to claim 1 or claim 2, wherein the composition comprises from 65-90% by dry weight plant sterol ester and/or plant stanol ester and from 10-35% by dry weight carrier.

4. The composition according to claim 3, wherein the composition comprises from 70-90% by dry weight plant sterol ester and/or plant stanol ester and from 10-30% by dry weight carrier.

5. The composition according to claim 4, wherein the composition comprises from 80-90% by dry weight plant sterol ester and/or plant stanol ester and from 10-20% by dry weight carrier.

6. The composition according to any one of claims 1 to 5, wherein the moisture content of the composition is less than 15% by weight.

7. The composition according to claim 6, wherein the moisture content of the composition is less than 10% by weight.

8. The composition according to claim 7, wherein the moisture content of the composition is less than 5% by weight.

9. The composition according to claim 8, wherein the moisture content of the composition is less than 3% by weight.

10. The composition according to any one of claims 1 to 9 comprising from 60-90% by dry weight plant stanol ester.

11. A dough composition comprising by dry weight from 78-98% flour and from 3.5-10% composition in powder form as defined in any one of claims 1 to 10.

12. The dough composition according to claim 11, wherein the dough composition is deep-frozen.

13. A bread composition comprising by dry weight from 78-98% flour and from 3.5-10% composition in powder form as defined in any one of claims 1 to 10.

14. Use of composition in powder form as defined in any one of claims 1 to 10 for increasing bread volume, by incorporating the composition in powder form in an amount of from 3.5-10% by dry weight of the dough.

15. A method of preparing dough for bread manufacturing comprising mixing the dry ingredients of the bread with a composition in powder form as defined in any one of claims 1 to 10 in an amount of from 3.5-10% by dry weight of the dough; adding water and mixing to obtain a dough.

## Patentansprüche

1. Zusammensetzung in Pulverform, umfassend:
60-90 Trockengew.-% an Pflanzensterolester und/oder Pflanzenstanolester,
10-40 Trockengew.-% an Träger und
einen Emulgator in einer Menge von 4-5% des Gewichts des Pflanzensterolesters und/oder Pflanzenstanolesters,
wobei der Träger 12-18 Trockengew.-% Caseinat und 82-88 Trockengew.-% Maltodextrin umfasst und
wobei es sich bei dem Emulgator um einen Citronensäurester von Mono- und Diglyceriden handelt.

2. Zusammensetzung nach Anspruch 1, wobei es sich bei dem Caseinat um Natriumcaseinat handelt.

3. Zusammensetzung nach Anspruch 1 oder Anspruch 2, wobei die Zusammensetzung 65-90 Trockengew.-% an Pflanzensterolester und/oder Pflanzenstanolester und 10-35 Trockengew.-% an Träger umfasst.

4. Zusammensetzung nach Anspruch 3, wobei die Zusammensetzung 70-90 Trockengew.-% an Pflanzensterolester und/oder Pflanzenstanolester und 10-30 Trockengew.-% an Träger umfasst.

5. Zusammensetzung nach Anspruch 4, wobei die Zusammensetzung 80-90 Trockengew.-% an Pflanzensterolester und/oder Pflanzenstanolester und 10-20 Trockengew.-% an Träger umfasst.

6. Zusammensetzung nach einem der Ansprüche 1 bis 5, wobei der Feuchtigkeitsgehalt der Zusammensetzung weniger als 15 Gew.-% beträgt.

7. Zusammensetzung nach Anspruch 6, wobei der Feuchtigkeitsgehalt der Zusammensetzung weniger als 10 Gew.-% beträgt.

8. Zusammensetzung nach Anspruch 7, wobei der Feuchtigkeitsgehalt der Zusammensetzung weniger als 5 Gew.-% beträgt.

9. Zusammensetzung nach Anspruch 8, wobei der Feuchtigkeitsgehalt der Zusammensetzung weniger als 3 Gew.-% beträgt.

10. Zusammensetzung nach einem der Ansprüche 1 bis 9, umfassend 60-90 Trockengew.-% an Pflanzenstanolester.

11. Teigzusammensetzung, umfassend, nach Trockengewicht, 78-98% Mehl und 3,5-10% Zusammensetzung in Pulverform, wie in einem der Ansprüche 1 bis 10 definiert.

12. Teigzusammensetzung nach Anspruch 11, wobei die Teigzusammensetzung tiefgefroren ist.

13. Brotzusammensetzung, umfassend, nach Trockengewicht, 78-98% Mehl und 3,5-10% Zusammensetzung in Pulverform, wie in einem der Ansprüche 1 bis 10 definiert.

14. Verwendung einer wie in einem der Ansprüche 1 bis 10 definierten Zusammensetzung in Pulverform zum Erhöhen des Brotvolumens, durch Einarbeiten der Zusammensetzung in Pulverform in einer Menge von 3,5-10 Trockengew.-% des Teigs.

15. Verfahren zur Herstellung von Teig zur Brotherstellung, bei dem man die trockenen Bestandteile des Brots mit einer wie in einem der Ansprüche 1 bis 10 definierten Zusammensetzung in Pulverform in einer Menge von 3,5-10 Trockengew.-% des Teigs mischt, mit Wasser versetzt und unter Erhalt eines Teigs mischt.

## Revendications

1. Composition sous forme de poudre comprenant :
de 60 à 90% en poids sec d'un ester de stérol végétal et/ou d'un ester de stanol végétal ;
de 10 à 40% en poids sec d'un véhicule ; et
un émulsifiant, en une quantité de 4 à 5% du poids de l'ester de stérol végétal et/ou de l'ester de stanol végétal,
dans laquelle le véhicule comprend de 12 à 18% en poids sec de caséinate et de 82 à 88% en poids sec de maltodextrine ; et
dans laquelle l'émulsifiant est un ester d'acide citrique de mono- et di-glycérides.

2. Composition selon la revendication 1, dans laquelle le caséinate est du caséinate de sodium.

3. Composition selon la revendication 1 ou la revendication 2, la composition comprenant de 65 à 90% en poids sec d'un ester de stérol végétal et/ou d'un ester de stanol végétal et de 10 à 35% en poids sec d'un véhicule.

4. Composition selon la revendication 3, la composition comprenant de 70 à 90% en poids sec d'un ester de stérol végétal et/ou d'un ester de stanol végétal et de 10 à 30% en poids sec d'un véhicule.

5. Composition selon la revendication 4, la composition comprenant de 80 à 90% en poids sec d'un ester de stérol végétal et/ou d'un ester de stanol végétal et de 10 à 20% en poids sec d'un véhicule.

6. Composition selon l'une quelconque des revendications 1 à 5, dans laquelle la teneur d'humidité de la composition est inférieure à 15% en poids.

7. Composition selon la revendication 6, dans laquelle la teneur d'humidité de la composition est inférieure à 10% en poids.

8. Composition selon la revendication 7, dans laquelle la teneur d'humidité de la composition est inférieure à 5% en poids.

9. Composition selon la revendication 8, dans laquelle la teneur d'humidité de la composition est inférieure à 3% en poids.

10. Composition selon l'une quelconque des revendications 1 à 9, comprenant de 60 à 90% en poids sec d'un ester de stanol végétal.

11. Composition pour pâte comprenant, en poids sec, de 78 à 98% de farine et de 3,5 à 10% d'une composition sous forme de poudre telle que définie dans l'une quelconque des revendications 1 à 10.

12. Composition pour pâte selon la revendication 11, la composition pour pâte étant surgelée.

13. Composition pour pain comprenant, en poids sec, de 78 à 98% de farine et de 3,5 à 10% d'une composition sous forme de poudre telle que définie dans l'une quelconque des revendications 1 à 10.

14. Utilisation d'une composition sous forme de poudre, telle que définie dans l'une quelconque des revendications 1 à 10, pour augmenter le volume d'un pain, par l'incorporation de la composition sous forme de poudre en une quantité allant de 3,5 à 10% en poids sec de la pâte.

15. Procédé de préparation d'une pâte destinée à la fabrication de pain, comprenant les étapes consistant à mélanger les ingrédients secs du pain avec une composition sous forme de poudre, telle que définie dans l'une quelconque des revendications 1 à 10, en une quantité allant de 3,5 à 10% en poids sec de la pâte ; ajouter de l'eau et mélanger pour obtenir une pâte.
